# EUROPÄISCHE PATENTSCHRIFT

(11) **EP 0 999 027 B1**
(45) Veröffentlichungstag und Bekanntmachung des Hinweises auf die Patenterteilung: **14.04.2004**
(21) Anmeldenummer: 99120691.3
(22) Anmeldetag: 19.10.1999
(51) Int. Cl.: B29C 44/24, B32B 31/30

(54) **Verfahren zur Herstellung eines Bauteils durch Coextrusion**
Coextrusion process for making a component
Procédé de fabrication d'un composant par coextrusion

(30) Priorität: 26.10.1998 DE 19849263
(43) Veröffentlichungstag der Anmeldung: 10.05.2000
(73) Patentinhaber: Möller Plast GmbH, 33649 Bielefeld (DE)
(72) Erfinder: Beckmann, Friedhelm, Dipl.-Ing., 32120 Hiddenhausen (DE)
(74) Vertreter: Schirmer, Siegfried, Dipl.-Ing.

(56) Entgegenhaltungen:
- EP-A- 0 476 798
- WO-A-95/32851
- CA-A- 948 820
- FR-A- 1 281 172
- US-A- 3 822 331
- US-A- 4 146 563
- DATABASE WPI Section Ch, Week 198638 Derwent Publications Ltd., London, GB; Class A17, AN 1986-249106 XP002129930 & JP 61 177234 A (YOSHINO KOGYOSHO CO LTD) , 8. August 1986 (1986-08-08)
- DATABASE WPI Section Ch, Week 198340 Derwent Publications Ltd., London, GB; Class A17, AN 1983-780551 XP002129931 & JP 58 145440 A (IDEMITSU PETROCHEM CO), 30. August 1983 (1983-08-30)
- PATENT ABSTRACTS OF JAPAN vol. 013, no. 194 (M-823), 10. Mai 1989 (1989-05-10) & JP 01 022541 A (IDEMITSU PETROCHEM CO LTD), 25. Januar 1989 (1989-01-25)
- DATABASE WPI Section Ch, Week 198239 Derwent Publications Ltd., London, GB; Class A32, AN 1982-82368E XP002129932 & JP 57 135121 A (SUMITOMO BAKELITE CO), 20. August 1982 (1982-08-20)
- PATENT ABSTRACTS OF JAPAN vol. 1996, no. 02, 29. Februar 1996 (1996-02-29) & JP 07 285188 A (SEKISUI CHEM CO LTD), 31. Oktober 1995 (1995-10-31)
- DATABASE WPI Section Ch, Week 199510 Derwent Publications Ltd., London, GB; Class A17, AN 1995-069799 XP002129933 & JP 06 344482 A (SEKISUI CHEM IND CO LTD) , 20. Dezember 1994 (1994-12-20)
- DATABASE WPI Section Ch, Week 198641 Derwent Publications Ltd., London, GB; Class A94, AN 1986-269403 XP002129934 & JP 61 197233 A (YOSHINO KOGYOSHO CO LTD) , 1. September 1986 (1986-09-01)

## Beschreibung

Die Erfindung betrifft ein Verfahren zum Herstellen eines Bauteils im Extrusionsblasverfahren mit einem Formwerkzeug durch Coextrusion, wobei eine oder mehrere innere Schicht(en) aus (einem) nicht schaumbildenden, relativ harten Werkstoff(en) mit einer oder mehreren äußeren Schicht(en) aus (einem) schaumbildenden, relativ weichen Werkstoff(en) coextrudiert werden.

An hochwertige Bauteile, die insbesondere als Funktions- oder Verkleidungsteile beispielsweise in Kraftfahrzeugen oder sonstigen Fahrzeugen eingesetzt werden, stellt man immer höhere Ansprüche an das äußere Erscheinungsbild und die Haptik derartiger Teile, was bedeutet, daß sowohl die Oberfläche bzw. Oberflächenstruktur derartiger Teile als auch deren Tiefenstruktur bestimmten Anforderungen genügen muß, um eine bestimmte Festigkeit und gleichzeitig Nachgiebigkeit zu erzielen. Dazu müssen selbstverständlich gewisse Forderungen im Hinblick auf ein günstiges Kosten/Nutzungsverhältnis erfüllt sein.

Bauteile dieser Art werden wegen der direkt beim Herstellungsprozeß gegebenen, hohen Integrationsmöglichkeit von Funktionselementen zunehmend im Extrusionsblasverfahren hergestellt. Dabei wird ein schlauchförmig aus einer Ringspaltdüse eines Extruders frisch extrudierter, thermoplastischer Werkstoff durch einen inneren Überdruck so verformt, daß sich der Werkstoff an eine vorgegebene Kontur eines Produktionswerkzeugs anlegt, so daß sich ein weitgehend doppelwandiges Bauteil ergibt. Um insbesondere der genannten Forderung nach einer vorteilhaften Haptik der Teile nachzukommen, ist es bekannt, durch Coextrusionsverfahren zwei unterschiedliche harte Werkstoffe aufeinanderzuschichten und dadurch Bauteile herzustellen, die eine relativ weiche Oberflächenschicht auf einer relativ harten Grundschicht aufweisen. Derartige Bauteile genügen aber in den meisten Fällen noch nicht den steigenden Anforderungen im Sinne einer angenehmen Haptik, da die äußere nachgiebige Schicht immer noch eine gewisse Grundhärte aufweist und von der Oberfläche her insgesamt nicht nachgiebig genug ist. Als weiteres Problem kommt hinzu, daß die Oberflächenschicht aufgrund der Strekkungsvorgänge bei der Ausformung des schmelzzähen, thermoplastischen Werkstoffs in vielen Fällen beeinträchtigt wird, so daß ein optisch entsprechender Gesamteindruck der Oberfläche nur schwer zu erzielen ist.

Aus der CA-A-0948820 ist allgemein die Herstellung flächiger Produkte aus einer oder mehreren Schichten ungeschäumten Harzmaterials und einer oder mehreren Schichten geschäumten Harzmaterials sowie ein Verfahren gemäß dem oberbegriff des Anspruch 1 bekannt.

Aus der JP-A-6177234 ist ein flächiges Material mit einer inneren Kunstharzschicht und einer äußeren geschäumten Kunstharzschicht bekannt, wobei das coextrudierte flächige Material mechanisch behandelt wird, so daß eine lederartige Struktur entsteht.

Aus der JP-A-58145440 ist ein coextrudierter laminierter Film mit einer ungeschäumten Schicht aus HD-Polyethylen und einer geschäumten Schicht aus LD-Polyethylen bekannt.

Der Erfindung liegt daher die Aufgabe zugrunde, ein weiterentwickeltes Verfahren zum Herstellen von Bauteilen durch Coextrusion anzugeben, bei dem die vorgenannten Nachteile nicht mehr auftreten, d.h. mit dem ein Bauteil hergestellt werden kann, welches eine harte bzw. erste Grundschicht, eine genügend dicke und nachgiebige Oberflächenschicht und gleichzeitig eine Oberfläche mit ansprechendem äußeren Erscheinungsbild aufweist.

Diese Aufgabe wird erfindungsgemäß durch ein Verfahren nach Anspruch 1 gelöst. Dadurch wird einerseits eine weitestgehende Übertragung der Oberflächenstruktur auf die Oberfläche des Bauteils erzielt, indem das Material vollflächig und ohne verbleibende Zwischenräume gegen das Formwerkzeug gedrückt wird, und andererseits kann sich der Schaum frei entfalten, ohne durch den hohen, die eigentliche Verformung bewirkenden Druck beeinträchtigt zu werden.

Vorzugsweise ist vorgesehen, daß eine im Gebrauch die Außenschicht bildende Schicht des Bauteils durch die (eine) zweite Schicht aus schaumbildendem Werkstoff gebildet wird. Alternativ kann vorgesehen sein, daß eine Außenschicht als Deckschicht aus einem nicht schaumbildenden Werkstoff gebildet ist. Eine derartige Deckschicht kann eine Dicke von 0,5 bis 1,5 mm haben und verhindert, daß Poren oder Bläschen des bei der Herstellung gebildeten Schaums an der Oberfläche sichtbar werden.

Zweckmäßigerweise ist vorgesehen, daß der bzw. die schaumbildende(n) Werkstoffe) ein mittels Energiezufuhr aktivierbares Treibmittel enthält bzw. enthalten. Die für die Aktivierung des Treibmittels erforderliche Energie kann entweder unmittelbar aus der Verarbeitungstemperatur der Werkstoffe im Extruder resultieren oder separat beispielsweise durch Hochfrequenz oder Mikrowellen zugeführt werden.

Bevorzugt besteht bzw. bestehen der (die) schaumbildenden Werkstoff(e) aus Polyurethan, Ethylen-Vinylacetat-Copolymer, Styrol-Ethylen-Butylen-Styrol, Styrol-Butylen-Styrol, Polyethylen oder Metallocen-PP. Als Treibmittel können beispielsweise Azodicarbonamid oder Natriumhydroxid verwendet werden. Diese chemischen Treibmittel schäumen in der Regel direkt hinter der Ringspaltdüse oder im Produktionswerkzeug auf.

Als Treibmittel können Stoffe verwendet werden, die bei einer bestimmten Temperatur aktiviert werden. Diese Temperatur kann beispielsweise 120 bis 300°C betragen. Es kann auch vorgesehen sein, daß Treibmittel unterschiedlicher Aktivierungstemperatur gemischt werden und dadurch eine vorgegebene Aktivierungstemperatur einstellbar ist. Dadurch läßt sich ein bestimmtes zeitliches und/oder räumliches Aufschäumungsverhalten erzielen.

In Ausgestaltung der Erfindung kann vorgesehen sein, daß der bzw. die schaumbildenden Werkstoff(e) expandierbare Mikrokapseln enthält (enthalten). Dadurch läßt sich ein besonders feinporiger Schaum erreichen. Die Mikrokapseln können aus einer thermoplastischen Polymerhülle bestehen, in der sich eine Flüssigkeit mit relativ niedrigem Siedepunkt befindet. Durch Wärmeinwirkung beim Extrusionsvorgang oder in einer nachgeschalteten Aufschäumungsphase mit separater Wärmezufuhr expandieren diese Kapseln dreidimensional, bis ein Ausgleich zwischen Innen- und Außendruck erreicht ist. Die Mikrokapseln können aus einem Polymerisat auf Basis Acrylnitril/Acrylat mit eingekapseltem Isopentan oder aus einem Polymerisat auf Basis Acrylnitril/Vinylidenchlorit mit eingekapseltem Isobutan bestehen.

Zweckmäßigerweise beträgt der Anteil von Mikrokapseln in einem schaumbildenden Werkstoff 2 bis 20 Gew.-%, wobei entweder Mikrokapseln allein oder in Verbindung mit einem chemischen Treibmittel bzw. Treibmittelmischungen vorgesehen sind.

Zusätzlich kann vorgesehen sein, daß der schäumbare Werkstoff nach der Schaumbildung peroxidisch vernetzt wird.

Es ist vorgesehen, daß die Werkstoffschichten innerhalb des Formwerkzeugs gegen eine Oberfläche des Formwerkzeugs gedrückt werden, die mit einer Oberflächenstruktur versehen ist, wodurch die Oberflächenstruktur auf eine Oberfläche des Bauteils übertragen wird. Diese sogenannte Abformnarbung kann eine beliebige Struktur aufweisen, wobei bevorzugt vorgesehen ist, daß die Oberflächenstruktur des Formwerkzeugs einer Lederhaut entspricht.

Der Überdruck innerhalb des Formwerkzeugs kann beispielsweise 2 bis 20 bar betragen, wogegen der "Blähdruck" des Schaums relativ gering ist.

In Weiterbildung der Erfindung ist bevorzugt vorgesehen, daß das Formwerkzeug porös oder mit Absaugkanälen versehen ist, damit das Bauteil durch einen von außerhalb des Formwerkzeugs wirkenden Unterdruck unterstützend gehalten werden kann.

Es kann vorgesehen sein, daß während der ersten Verformungsphase eine Schaumbildung nicht oder nur teilweise erfolgt, und daß in der anschließenden zweiten Verformungsphase eine vollständige Schaumbildung erfolgt. Die vollständige Schaumbildung kann durch zusätzliche Energiezufuhr bewirkt werden.

Weitere zweckmäßige Ausgestaltungen sind in den übrigen Unteransprüchen aufgezeigt.

## Patentansprüche

1. Verfahren zum Herstellen eines Bauteils im Extrusionsblasverfahren durch Coextrusion mit einer Ringspaltdüse, wobei ein Blasschlauch mit mindestens einer inneren Schicht aus mindestens einem nicht schaumbildenden, ersten Werkstoff und mit mindestens einer äußeren Schicht aus mindestens einem schaumbildenden, zweiten Werkstoff coextrudiert wird, wobei der mindestens eine erste Werkstoff härter ist als der mindestens eine zweite Werkstoff, **dadurch gekennzeichnet, daß** innerhalb des Blasschlauchs in einer ersten Verformungsphase ein erster Überdruck gegenüber einem Formwerkzeug und in einer anschließenden zweiten Verformungsphase ein zweiter Überdruck gegenüber dem Formwerkzeug wirkt, wobei der erste Überdruck höher ist als der zweite Überdruck.

2. Verfahren nach Anspruch 1, **dadurch gekennzeichnet, daß** eine im Gebrauch die Außenschicht bildende Schicht des Bauteils durch die oder eine zweite Schicht aus schaumbildendem Werkstoff gebildet wird.

3. Verfahren nach Anspruch 1, **dadurch gekennzeichnet, daß** eine Außenschicht als Deckschicht aus einem nicht schaumbildenden Werkstoff gebildet ist.

4. Verfahren nach Anspruch 3, **dadurch gekennzeichnet, daß** die Deckschicht eine Dicke von 0,5 bis 1,5 mm aufweist.

5. Verfahren nach einem der vorangehenden Ansprüche, **dadurch gekennzeichnet, daß** der schaumbildende Werkstoff oder die schaumbildenden Werkstoffe ein mittels Energiezufuhr aktivierbares Treibmittel enthält oder enthalten.

6. Verfahren nach einem der vorangehenden Ansprüche, **dadurch gekennzeichnet, daß** der schaumbildende Werkstoff oder die schaumbildenden Werkstoffe aus Polyurethan, Ethylen-Vinylacetat-Copolymer, Styrol-Ethylen-Butylen-Styrol, Styrol-Butylen-Styrol, Polyethylen oder Metallocen-PP besteht oder bestehen.

7. Verfahren nach Anspruch 5, **dadurch gekennzeichnet, daß** Azodicarbonamid oder Natriumhydroxid als Treibmittel verwendet werden.

8. Verfahren nach einem der Ansprüche 5 bis 7, **dadurch gekennzeichnet, daß** eine Kombination von Treibmitteln verwendet wird und dadurch eine vorgegebene Spanne der Reaktionstemperatur bestimmbar ist.

9. Verfahren nach Anspruch 8, **dadurch gekennzeichnet, daß** die Temperatur 120° bis 300°C beträgt.

10. Verfahren nach Anspruch 8 oder 9, **dadurch gekennzeichnet, daß** Treibmittel unterschiedlicher Aktivierungstemperatur gemischt werden und dadurch eine vorgegebene Aktivierungstemperatur einstellbar ist.

11. Verfahren nach einem der vorangehenden Ansprüche, **gekennzeichnet durch** eine Kombination von expandierenden Mikrokapseln und schaumbildenden Treibmitteln.

12. Verfahren nach Anspruch 11, **dadurch gekennzeichnet, daß** die Mikrokapseln aus einer thermoplastischen Polymerhülle bestehen, in der sich eine Flüssigkeit mit relativ niedrigem Siedepunkt befindet.

13. Verfahren nach Anspruch 11 oder 12, **dadurch gekennzeichnet, daß** die Mikrokapseln aus Polymerisat auf Basis Acrylnitril/Acrylat mit eingekapselten Isopentan oder aus Polymerisat auf Basis Acrylnitril/Vinylidenchlorit mit eingekapselten Isobutan bestehen.

14. Verfahren nach einem der Ansprüche 11 bis 13, **dadurch gekennzeichnet, daß** der Anteil Mikrokapseln in einem schäumbaren Werkstoff 2 bis 20 Gew.-% beträgt.

15. Verfahren nach einem der vorangehenden Ansprüche, **dadurch gekennzeichnet, daß** der schaumbildende Werkstoff oder die schaumbildenden Werkstoffe nach der Schaumbildung peroxidisch vernetzt wird oder werden.

16. Verfahren nach einem der vorangehenden Ansprüche, **dadurch gekennzeichnet, daß** der Überdruck 2 bis 20 bar beträgt.

17. Verfahren nach Anspruch 16, **dadurch gekennzeichnet, daß** die Oberflächenstruktur des Formwerkzeugs einer Lederhaut entspricht.

18. Verfahren nach einem der Ansprüche 16 oder 17, **dadurch gekennzeichnet, daß** ein flächenartiges Gebilde zur Oberflächen-Strukturbildung in das Formwerkzeug eingelegt wird.

19. Verfahren nach einem der Ansprüche 16 oder 17, **dadurch gekennzeichnet, daß** zur Oberflächen-Strukturbildung auf der Oberfläche des Bauteils ein flächenartiges Gebilde nachträglich befestigt wird.

20. Verfahren nach Anspruch 19, **dadurch gekennzeichnet, daß** das flächenartige Gebilde auf die Oberfläche des Bauteils aufgeklebt wird.

21. Verfahren nach einem der Anspruch 18, **dadurch gekennzeichnet, daß** das flächenartige Gebilde unter Anwendung des Vakuumverfahrens aufgebracht wird.

22. Verfahren nach einem der Ansprüche 18 bis 21, **dadurch gekennzeichnet, daß** das flächenartige Gebilde durch eine Folie gebildet ist.

23. Verfahren nach Anspruch 22, **dadurch gekennzeichnet, daß** die Folie eine Stärke von 0,5 bis 1,5 mm aufweist.

24. Verfahren nach einem der Ansprüche 18 oder 21, **dadurch gekennzeichnet, daß** das Formwerkzeug porös oder mit Absaugkanälen versehen ist, damit das Bauteil durch einen von außerhalb des Formwerkzeugs wirkenden Unterdruck unterstützend gehalten werden kann.

25. Verfahren nach einem der vorangehenden Ansprüche, **dadurch gekennzeichnet, daß** während der ersten Verformungsphase eine Schaumbildung nicht oder nur teilweise erfolgt, und in der anschließenden zweiten Verformungsphase eine vollständige Schaumbildung erfolgt.

26. Verfahren nach Anspruch 25, **dadurch gekennzeichnet, daß** die vollständige Schaumbildung durch zusätzliche Energiezufuhr bewirkt wird.

## Claims

1. Method of producing a component in the extrusion blowing process by coextrusion by an annular passage nozzle, wherein a blown hose with at least one inner layer of at least one non-foam-forming first material and with at least one outer layer of at least one foam-forming second material is coextruded, wherein the at least one first material is harder than the at least one second material, **characterised in that** within the blown hose a first excess pressure acts relative to a mould tool in a first forming phase and a second excess pressure acts relative to the mould tool in a subsequent, second forming phase, wherein the first excess pressure is higher than the second excess pressure.

2. Method according to claim 1, **characterised in that** a layer of the component forming the outer layer in use is formed by the or a second layer of foam-forming material.

3. Method according to claim 1, **characterised in that** an outer layer as cover layer is formed from a non-foam-forming material.

4. Method according to claim 3, **characterised in that** the cover layer has a thickness of 0.5 to 1.5 mm.

5. Method according to one of the preceding claims, **characterised in that** the foam-forming material or the foam-forming materials contains or contain a blowing agent activatable by means of the feed of energy.

6. Method according to one of the preceding claims, **characterised in that** the foam-forming material or the foam-forming materials consist or consists of polyurethane, ethylene vinylacetate copolymer, styrol ethylene butylene styrol, styrol butylene styrol, polyethylene or metallocene polypropylene.

7. Method according to claim 5, **characterised in that** azodicarbonamide or sodium hydroxide is used as blowing agent.

8. Method according to one of claims 5 to 7, **characterised in that** a combination of blowing agents is used and a predetermined span of the reaction temperature is thereby determinable.

9. Method according to claim 8, **characterised in that** the temperature amounts to 120° to 300° C.

10. Method according to claim 8 or 9, **characterised in that** blowing agents of different activation temperature are mixed and thereby a predetermined activation temperature is settable.

11. Method according to one of the preceding claims, **characterised by** a combination of expanding microcapsules and foam-forming blowing agents.

12. Method according to claim 11, **characterised in that** the microcapsules consist of a thermoplastic polymer casing in which a liquid with relatively low boiling point is disposed.

13. Method according to claim 11 or 12, **characterised in that** the microcapsules consist of polymerisate on the basis of acrylnitrile/acrylate with encapsulated isopentane or of polymerisate on the basis of acrylnitrile/vinylidenechlorite with encapsulated isobutane.

14. Method according to one of claims 11 to 13, **characterised in that** the proportion of microcapsules in a foamable material amounts to 2 to 20 weight percent.

15. Method according to one of the preceding claims, **characterised in that** the foam-forming material or the foam-forming materials is or are peroxide-cured after formation of foam.

16. Method according to one of the preceding claims, **characterised in that** the excess temperature amounts to 2 to 20 bars.

17. Method according to claim 16, **characterised in that** the surface structure of the mould tool corresponds with a corium.

18. Method according to one of claims 16 and 17, **characterised in that** an areal body for surface structure formation is inserted into the mould tool.

19. Method according to one of claims 16 and 17, **characterised in that** an areal body is subsequently fastened to the surface of the component for surface structure formation.

20. Method according to claim 19, **characterised in that** the areal body is glued to the surface of the component.

21. Method according to claim 18, **characterised in that** the areal body is applied with use of a vacuum method.

22. Method according to one of claims 18 to 21, **characterised in that** the areal body is formed by a film.

23. Method according to claim 22, **characterised in that** the film has a thickness of 0.5 to 1.5 mm.

24. Method according to one of claims 18 and 21, **characterised in that** the mould tool is porous or is provided with suction channels so that the component can be held in supporting manner by an underpressure acting from outside the mould tool.

25. Method according to one of the preceding claims, **characterised in that** during the first forming phase a foam formation does not take place or takes place only partly and in the subsequent, second forming phase a complete foam formation takes place.

26. Method according to claim 25, **characterised in that** the complete foam formation is produced by additional feed of energy.

## Revendications

1. Procédé de fabrication d'un composant selon le procédé d'extrusion-soufflage par co-extrusion avec une buse à interstice annulaire, un tube de soufflage étant co-extrudé avec au moins une couche intérieure en au moins un premier matériau non moussant et avec au moins une couche extérieure en au moins un deuxième matériau moussant, au moins un premier matériau étant plus dur qu'au moins un deuxième matériau,
**caractérisé en ce qu'**
à l'intérieur du tube de soufflage, dans une première phase de déformation, une première surpression agit par rapport à un outil de moulage, et dans une deuxième phase de déformation suivante, une deuxième surpression agit par rapport à l'outil de moulage, la première surpression étant supérieure à la deuxième surpression.

2. Procédé selon la revendication 1,
**caractérisé en ce qu'**
une couche du composant, qui pendant l'utilisation constitue la couche extérieure, est formée par la ou une deuxième couche en matériau moussant.

3. Procédé selon la revendication 1,
**caractérisé en ce qu'**
une couche extérieure servant de couche de couverture est formée d'un matériau non moussant.

4. Procédé selon la revendication 3,
**caractérisé en ce que**
la couche de couverture peut présenter une épaisseur de 0,5 à 1,5 mm.

5. Procédé selon l'une quelconque des revendications précédentes,
**caractérisé en ce que**
le (ou les) matériau(x) moussant(s) comprend (ou comprennent) un agent moussant activable par apport d'énergie.

6. Procédé selon l'une quelconque des revendications précédentes,
**caractérisé en ce que**
le (ou les) matériau(x) moussant(s) est (ou sont) en polyuréthane, un copolymère éthylène-acétate de vinyle, en styrène-éthylène-butylène-styrène, en styrène-butylène-styrène, en polyéthylène ou en métallocène-PP.

7. Procédé selon la revendication 5,
**caractérisé en ce que**
comme agent moussant on utilise de l'azodicarbonamide ou de l'hydroxyde de sodium.

8. Procédé selon l'une quelconque des revendications 5 à 7,
**caractérisé en ce qu'**
on utilise une combinaison d'agents moussants permettant ainsi de déterminer une plage prédéterminée de températures de réaction.

9. Procédé selon la revendication 8,
**caractérisé en ce que**
la température est comprise entre 120° et 300°C.

10. Procédé selon la revendication 8 ou 9,
**caractérisé en ce qu'**
on mélange des agents moussants ayant des températures d'activation différentes permettant de régler ainsi une température d'activation prédéterminée.

11. Procédé selon l'une quelconque des revendications précédentes,
**caractérisé par**
une combinaison de micro-capsules expansibles et d'agents moussants.

12. Procédé selon la revendication 11,
**caractérisé en ce que**
les micro-capsules comportent une enveloppe en polymère thermoplastique contenant un liquide avec un point d'ébullition relativement bas.

13. Procédé selon la revendication 11 ou 12,
**caractérisé en ce que**
les micro-capsules sont en un polymérisat à base d'acrylonitrile/acrylate avec de l'isopentane encapsulé, ou en un polymérisat à base d'acrylonitrile/chlorure de vinylidène avec de l'isopentane encapsulé.

14. Procédé selon l'une quelconque des revendications 11 à 13,
**caractérisé en ce que**
la proportion de micro-capsules dans un matériau moussant est de 2 à 20 % en poids.

15. Procédé selon l'une quelconque des revendications précédentes,
**caractérisé en ce qu'**
après la formation de la mousse le ou les matériau(x) moussant(s) est ou sont réticulé(s) par peroxyde.

16. Procédé selon l'une quelconque des revendications précédentes,
**caractérisé en ce que**
la surpression est comprise entre 2 et 20 bars.

17. Procédé selon la revendication 16,
**caractérisé en ce que**
la structure superficielle de l'outil de moulage correspond à une peau de cuir.

18. Procédé selon l'une quelconque des revendications 16 ou 17,
**caractérisé en ce qu'**
un complexe plat. est inséré dans l'outil de moulage pour former la structure superficielle.

19. Procédé selon l'une quelconque des revendications 16 ou 17,
**caractérisé en ce qu'**
un complexe plat est fixé ultérieurement à la surface du composant pour former la structure superficielle.

20. Procédé selon la revendication 19,
**caractérisé en ce que**
le complexe plat est collé sur la surface du composant.

21. °) Procédé selon la revendication 18,
**caractérisé en ce que**
le complexe plan est appliqué en utilisant le procédé de vide.

22. Procédé selon l'une quelconque des revendications 18 à 21,
**caractérisé en ce que**
le complexe plat est un film.

23. Procédé selon la revendication 22,
**caractérisé en ce que**
le film présente une épaisseur comprise entre 0,5 et 1,5 mm.

24. Procédé selon l'une quelconque des revendications 18 ou 21,
**caractérisé en ce que**
l'outil de moulage est poreux ou présente des canaux d'aspiration permettant de soutenir le composant par une dépression agissant depuis l'extérieur de l'outil de moulage.

25. Procédé selon l'une quelconque des revendications précédentes,
**caractérisé en ce que**
pendant la première phase de déformation une formation de mousse n'a pas lieu ou n'a lieu que partiellement, et dans la deuxième phase de déformation suivante a lieu une formation de mousse complète.

26. Procédé selon la revendication 25,
**caractérisé en ce que**
la formation de mousse complète est occasionnée par un apport d'énergie supplémentaire.
